# EUROPEAN PATENT SPECIFICATION

(11) **EP 3 402 131 B1**
(45) Date of publication and mention of the grant of the patent: **26.05.2021**
(21) Application number: 16891991.8
(22) Date of filing: 02.03.2016
(51) Int. Cl.: H04L 12/46, H04L 12/24, H04L 12/26

(54) **RESOURCE CONFIGURATION METHOD, VIRTUALIZED NETWORK FUNCTION MANAGER AND NETWORK ELEMENT MANAGEMENT SYSTEM**
RESSOURCENKONFIGURATIONSVERFAHREN, MANAGER FÜR VIRTUALISIERTE NETZWERKFUNKTIONEN UND VERWALTUNGSSYSTEM FÜR NETZWERKELEMENTE
PROCÉDÉ DE CONFIGURATION DE RESSOURCES, GESTIONNAIRE VIRTUALISÉ DE FONCTION DE RÉSEAU ET SYSTÈME DE GESTION D'ÉLÉMENT DE RÉSEAU

(43) Date of publication of application: 14.11.2018
(73) Proprietor: Huawei Technologies Co., Ltd., Longgang District Shenzhen, Guangdong 518129 (CN)
(72) Inventor: XIA, Haitao, Shenzhen Guangdong 518129 (CN)
(74) Representative: Goddar, Heinz J.
(86) International application number: PCT/CN2016/075284
(87) International publication number: WO 2017/147800

(56) References cited:
- EP-A1- 2 849 064
- EP-A1- 2 955 631
- WO-A1-2015/199685
- CN-A- 104 219 127
- CN-A- 104 468 688
- CN-A- 105 262 664
- ZTE ET AL: "Add use case of VNF scaling initiated by EM with scaling target", 3GPP DRAFT; S5-153104 PCR TR 32.842 ADD USE CASE OF VNF SCALING INITIATED BY EM WITH SCALING TARGET, 3RD GENERATION PARTNERSHIP PROJECT (3GPP), MOBILE COMPETENCE CENTRE ; 650, ROUTE DES LUCIOLES ; F-0 , vol. SA WG5, no. Ljubljana; 20150525 - 20150529 24 May 2015 (2015-05-24), XP050969424, Retrieved from the Internet: URL:http://www.3gpp.org/ftp/Meetings_3GPP_ SYNC/SA5/Docs/ [retrieved on 2015-05-24]
- - European Telecommunications Standards Institute (etsi),: "Network Functions Virtualisation (NFV); Management and Orchestration", ETSI GS NFV-MAN 001 V1.1.1 (2014-12), 1 December 2014 (2014-12-01), pages 1-184, XP055366912, Retrieved from the Internet: URL:http://www.etsi.org/deliver/etsi_gs/NF V-MAN/001_099/001/01.01.01_60/gs_NFV-MAN00 1v010101p.pdf [retrieved on 2017-04-24]
- N/a: "Specification of the Infrastructure Virtualisation, Management and Orchestration - Interim.", T-NOVA, 30 September 2014 (2014-09-30), pages 1-193, XP055385973, Retrieved from the Internet: URL:http://www.t-nova.eu/wp-content/upload s/2014/12/TNOVA_D2.31_Spec_of_IVM_and_Orch estrator_I.pdf [retrieved on 2017-06-28]

## Description

### TECHNICAL FIELD

This application relates to the field of communications technologies, and in particular, to a virtualization resource management technology in Network Functions Virtualization.

### BACKGROUND

Network Functions Virtualization (NFV, Network Function Virtualization) means that a telecommunication network operator implements some telecommunications network functions in general-purpose cloud servers, switches, and storage devices with reference to a virtualization technology in the information technology field, so as to implement fast and efficient deployment of a network service.

In a NFV management and orchestration (MANO, Management and Orchestration) architecture defined by the European Telecommunications Standards Institute (European Telecommunications Standards Institute, ETSI), after creating a virtualized network function (VNF, Virtualised Network Function) instance, a virtualized network function manager (VNFM, Virtualised Network Function Manager) may configure a VNF deployment flavor (DF, Deployment Flavor) for the VNF instance, so that the VNF instance runs within a resource range deployed by the VNF deployment flavor, and a resource change range of a scaling (scaling) operation of the VNF instance is also limited within the resource range deployed by the VNF deployment flavor. However, when a quantity of resources required for service processing of the VNF instance exceeds the resource range deployed by the deployment flavor configured for the VNF instance, if the VNF instance still runs within the resource range deployed by the originally deployed deployment flavor, an exception occurs in processing of a service of a terminal user by the VNF instance. For example, service quality of user data cannot be ensured, and therefore a running status of the VNF instance is affected.

3GPP document S5-153104 discloses that an EM sends VNF scaling request to the VNFM with information which indicates the scaling direction as the scaling target (i.e. expansion or contraction). According to the scaling target, the VNFM determines the target deployment flavour based on the information of the VNF descriptor. VNFM initiates the scaling operation to expand or contract the capacity of the VNF according to the selected deployment flavour.

EP 2 849 064 A1 discloses that an NCP Cloud Agent receives a list of KPIs and a VNF description template. The NCP Cloud Agent calculates how many servers of each type contribute to the KPIs according to a mapping of hardware resources (e.g. GFLOPS, RAM, IO Capacity) to KPIs in the VNF description template.

EP 2 955 631 A1 discloses that an OSS sends an indication to the VNF orchestrator that a load level in the present communication network is exceeded. This information is a trigger for the VNF orchestrator to conduct an adjustment of amount and type of VNFs being instantiated in the virtualization infrastructure for a usage in the communication network managed by the OSS. The OSS sends control information containing traffic pattern information or traffic mix information of communications to the VNF orchestrator. The VNF orchestrator requests control information from the virtualization infrastructure, e.g. via the VNF infrastructure manager, in order to learn the available hardware capability or resources which can be used by the VNF orchestrator for the instantiation of at least one VNF. The VNF orchestrator conducts a processing for selecting at least one suitable VNF for usage in the communication network. The selection is based, for example, on a comparison of parameters derived from the control information (i.e. traffic pattern, HW resources) and corresponding parameters indicated in the data sets, which are provided e.g. in the VNF description types.

ETSI technical specification (ETSI GS NFV-MAN 001 v1.1.1) discloses network function virtualisation management and orchestration.

"Specification of the Infrastructure Virtualization, Management and Orchestration-Interim", T-NOVA, September 30, 2014 discloses that an VNFM collects performance metrics related with the VNF application and with infrastructure resources. Based on the retrieved performance metrics and an auto-scaling policies included in the VNFD, the VNFM detects the need to scale. The VNFM decides that the best option is to scale-out the VNF.

### SUMMARY

The present invention is defined in the appended independent claims to which reference should be made.

In view of this, this invention provides a resource configuration method of claim 1, a virtualized network function manager (VNFM) of claim 4, and a computer program product of claim 7 and a system of claim 8, so as to alleviate inability of a VNF instance to meet a service processing requirement

Advantageous features are set out in the appended dependent claims.

### BRIEF DESCRIPTION OF DRAWINGS

To describe the technical solutions in the embodiments of this application more clearly, the following briefly describes the accompanying drawings required for describing the embodiments. Apparently, the accompanying drawings in the following description show merely some embodiments of this application, and a person of ordinary skill in the art may still derive other drawings from these accompanying drawings without creative efforts.
FIG. 1 shows an architectural diagram of a possible network functions virtualization NFV system according to this application;
FIG. 2 shows a schematic flowchart of an embodiment of a resource configuration method according to this application;
FIG. 3 shows a possible schematic communication interaction diagram of a resource configuration method according to this application;
FIG. 4 shows another possible schematic communication interaction diagram of a resource configuration method according to this application;
FIG. 5 shows a schematic flowchart of an embodiment of another resource configuration method according to this application;
FIG. 6 shows a schematic flowchart of an embodiment of another resource configuration method according to this application;
FIG. 7 shows a possible schematic structural diagram of a virtualized network function manager according to this application; and
FIG. 8 shows a possible schematic structural diagram of an element management system according to this application.

### DESCRIPTION OF EMBODIMENTS

A system architecture described in the embodiments of the present invention is intended to describe the technical solutions of the embodiments of the present invention more clearly, and do not constitute any limitation to the technical solutions provided in the embodiments of the present invention. A person of ordinary skill in the art may know that, with evolution of the system architecture and emergence of a new service scenario, the technical solutions provided in the embodiments of the present invention are also applicable to similar technical problems

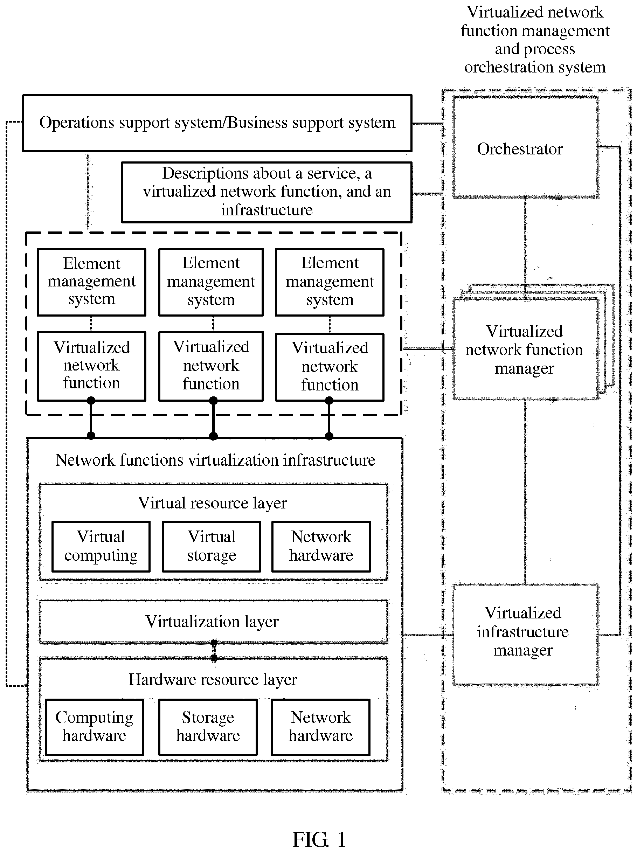

FIG. 1 is an architectural diagram of a network functions virtualization NFV system according to this application. A resource configuration method in this application is mainly applied to the NFV system. As shown in FIG. 1, an architecture of the NFV system mainly includes the following several function components:
operations support system (OSS, Operations Support Systems)/business support system (BSS, Business Support Systems), which is configured to initiate a service request and provide a resource required for a service to a network functions virtualization orchestrator (NFVO, NFV Orchestrator), and is responsible for troubleshooting;
NFVO, which is responsible for implementing an NFV service based on a service request of the OSS/BSS, and responsible for life cycle management of a network service (NS, Network Service), resource orchestration and management, and real-time monitoring of a network functions virtualization infrastructure (NFVI, NFV Infrastructure) resource and running status information; and implements life cycle management of a virtualized network function (VNF, Virtualised Network Function) and a global view of the resources in cooperation with a virtualized network function manager (VNFM, Virtualised Network Function Manager);
VNFM, which is responsible for life cycle management of the VNF, for example, initialization of a VNF instance, scaling of the VNF instance, termination of the VNF instance, and management of VNF running status information;
virtualized infrastructure manager (VIM, Virtualised Infrastructure Manager), which is responsible for management, monitoring, and fault reporting of hardware resources and virtualization resources of an infrastructure layer, and provides a virtualization resource pool for an upper-layer application, for example, responsible for managing and allocating NFVI resources, and monitoring and collecting information about a running status of the NFVI;
element management system (EMS, Element Management System), which is responsible for fault management, configuration management, accounting management, performance management, and security management (FCAPS, Fault Management, Configuration Management, Accounting Management, Performance Management, Security Management) of a network element, where the element management system is also referred to as an element manager (EM, Element Manager); and
NFVI resources, which include a hardware resource, a virtual resource, and a virtualization layer, and include NFVI resources of all NFVI resource states, such as available/reserved/allocated NFVI resources. From a perspective of the VNF, the virtualization layer and the hardware resource are considered as an entity that can provide required virtual resources.

In the NFV system, the VNF is a software implementation of a network function (NF, Network Function) that can run on the NFVI. The VNF is equivalent to an entity of a network node, and is expected to be delivered by using only software that is independent of hardware. In the NFV system, the VNF and a physical network function (PNF, Physical Network Function) in a non-virtualized network are expected to have a same functional behavior and external interface.

After creating the VNF, the VNFM may configure a deployment flavor for the VNF. The deployment flavor (DF, Deployment Flavor) is also referred to as a VNF deployment flavor, and reflects a deployment view of a VNF on a network functions virtualization infrastructure (for example, a virtualized data unit and a virtual machine). Description of the VNF Deployment Flavor by the European Telecommunications Standards Institute (European Telecommunications Standards Institute, ETSI) is as follows: The VNF DF defines deployable configuration of a virtualized data unit (VDU, Virtualised Data Unit) and deployable configuration of a connection between virtualized data units in a VNF deployment view, and generally includes a minimum quantity and a maximum quantity of components that can instantiate the VNF from a virtualized data unit. In short, the deployment flavor specifies a range interval of available virtual resources of the VNF. After a deployment flavor is configured for the VNF instance, the scaling operation of the VNF is performed, so that a capacity change range of the VNF can be kept within a resource range limited by the deployment flavor configured for the VNF. However, when a resource range required by service processing of the VNF exceeds a maximum resource range specified by the deployment flavor, a service processing requirement of the VNF cannot be met.

The following further describes the embodiments of the present invention in detail based on the foregoing common problems related to the present invention.

An embodiment of the present invention provides a resource configuration method and a virtualized network function manager VNFM based on the method. The VNFM obtains a performance parameter that reflects a running status of a VNF instance (for example, a performance indication parameter and virtual resource usage). A target deployment flavor that needs to be configured to meet a requirement of service processing of the VNF instance in a running status of the VNF instance is determined based on a mapping relationship between the performance parameter and a deployment flavor in a descriptor file corresponding to the VNF instance, and resource configuration is performed for the VNF instance based on a currently configured deployment flavor of the VNF instance and the target deployment flavor, so that resource configuration is performed for the VNF instance more properly in a current running status of the VNF instance, and a resource range specified by the deployment flavor configured for the VNF instance can meet a running requirement of the VNF instance, thereby ensuring a normal running status of the VNF instance, and alleviating service exceptions.

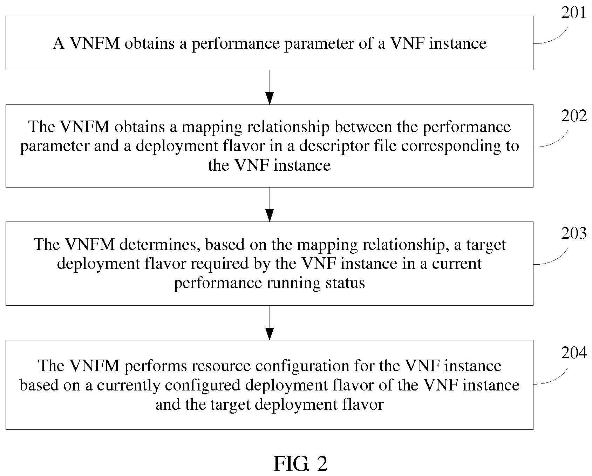

A solution of a resource configuration method provided in an embodiment of this application is described below with reference to FIG. 2. As shown in FIG. 2, the resource configuration method provided in this embodiment of this application may include the following steps.

S201. A VNFM obtains a performance parameter that reflects a running status of a virtualized network function VNF instance.

It may be understood that performance of the VNF instance may be reflected in a plurality of aspects, such as a service processing speed, a resource usage status, and an application layer running status. Accordingly, the performance parameter may have a plurality of possible cases:
In an example, the performance parameter may be a performance indication parameter of the VNF instance. The performance indication parameter may be understood as a parameter of a VNF indicator that is commonly known in the field, and the performance indication parameter is used to indicate a performance running status of an application layer of the VNF instance. The performance indication parameter includes at least one monitored value. The monitored value may be considered as a status value of the indicator. An actual performance running status of the application layer of the VNF instance may be reflected by the monitored value. A specific type and meaning of the performance indication parameter may be predetermined by a VNF provider. For example, the performance indication parameter may be a set of enumerated values that represent a running health index of the VNF application layer. For example, the monitored value of the performance indication parameter and a meaning thereof may include: green (indicating that an application layer running status is healthy), yellow (indicating that an application layer running status is sub-healthy), orange (indicating that an application layer running status is severely sub-healthy), and red (indicating that an application layer running status is unhealthy and serious performance deterioration occurs).

A manner of obtaining the performance indication parameter may be as follows: An element management system EMS sends the performance indication parameter of the VNF instance to the VNFM, or the VNF instance sends the performance indication parameter of the VNF instance to the VNFM.

In another example, the performance parameter may be virtual resource usage of the VNF instance, for example, CPU usage or network bandwidth usage.

A manner in which the VNFM obtains the virtual resource usage may be monitoring the virtual resource usage of the VNF instance by using a virtualized infrastructure manager VIM, and reporting the virtual resource usage to the VNFM by the VIM.

S202. The VNFM obtains a mapping relationship between the performance parameter and a deployment flavor in the descriptor file.

The descriptor file describes deployment flavors that need to be configured for performance parameters of the VNF instance within different ranges. Optionally, the mapping relationship may be written into the descriptor file in a design phase of the VNF. In this embodiment, the descriptor file may be understood as a VNF descriptor (VNFD, VNF Descriptor). The VNFD is a deployment flavor file that is used to describe deployment and operation behavior requirements of a virtualized network function (VNF), and further includes descriptions about connectivity and a function interface of the VNF, and a requirement for virtualized resources. In this embodiment, the foregoing mapping relationship is written into the VNFD.

In an NFV system architecture, a VNF developer provides descriptor files corresponding to different types of VNF instances, one descriptor file may include one or more deployment flavors, and deployment flavors included in different descriptor files may be different. Therefore, a descriptor file corresponding to the VNF instance needs to be determined, so as to determine at least one deployment flavor that can be configured for the VNF instance and a range of a performance parameter corresponding to the at least one deployment flavor.

Optionally, before obtaining the mapping relationship in the descriptor file corresponding to the VNF instance, the VNFM may access the descriptor file corresponding to the VNF instance, so as to obtain the mapping relationship from the descriptor file. Further, before accessing the VNF instance, the VNFM may determine identification information of the VNF instance. For example, the VNFM obtains both the performance parameter of the VNF instance and an identifier of the VNF instance, and then accesses the descriptor file corresponding to the VNF instance based on the identifier of the VNF instance. The identification information of the VNF instance may be a name or a unique identifier of the VNF instance.

Corresponding to the possible cases of the foregoing performance parameter, in an example, the mapping relationship may include at least one monitored value corresponding to each deployment flavor in the at least one deployment flavor that can be selected by the VNF instance or a range of the monitored value. The descriptor file corresponding to the VNF instance describes the at least one deployment flavor that can be selected by the VNF instance, and a deployment flavor that is suitable for selection within different monitored values or different monitored value ranges of the performance indication parameter.

In another example, the mapping relationship may include a value range of virtual resource usage corresponding to each deployment flavor of a plurality of deployment flavors that can be selected by the VNF instance. For example, when the virtual resource usage is within a first value range, a deployment flavor that is suitable to be configured is a deployment flavor 1; or when the virtual resource usage is within a second value range, a deployment flavor that is suitable to be configured is a deployment flavor 2.

S203. The VNFM determines, based on the mapping relationship and the performance parameter that reflects the running status of the VNF instance, a target deployment flavor required by the VNF instance in the running status.

A deployment flavor that is suitable to be configured for the VNF instance in the current performance running status may be determined based on the mapping relationship in the descriptor file and a performance parameter that reflects a current running status of the VNF instance. For ease of differentiation, in this embodiment, the determined deployment flavor that is suitable for the VNF in the current performance running status is referred to as the target deployment flavor.

S204. The VNFM performs resource configuration for the VNF instance based on a currently configured deployment flavor of the VNF instance and the target deployment flavor.

In an example, if the currently configured deployment flavor of the VNF is different from the target deployment flavor, the VNFM may change the currently configured deployment flavor of the VNF instance to the target deployment flavor. For example, the VNFM deletes a binding relationship between the VNF instance and the currently bound deployment flavor of the VNF, and establishes a binding relationship between the VNF instance and the target deployment flavor. Correspondingly, if the currently configured deployment flavor of the VNF is the target deployment flavor, the currently configured deployment flavor of the VNF instance may be kept unchanged.

In another example, the VNFM does not need to consider whether the currently deployed deployment flavor of the VNF is the same as the target deployment flavor. After determining the target deployment flavor, the VNFM only needs to change the currently configured deployment flavor of the VNF instance to the target deployment flavor.

Configuring a deployment flavor for the VNF instance may be understood as establishing or storing a binding relationship between the VNF instance and the deployment flavor. In this way, the VNFM may allocate a resource for performing a task to the VNF instance based on a resource range corresponding to the deployment flavor configured for the VNF instance.

Optionally, after step 204, this embodiment of this application may further include: sending, by the VNFM, a notification message to any one or more of an NFVO and the EMS, where the notification message is used to instruct the VNFM to perform resource configuration for the VNF instance. Particularly, when the deployment flavor configured for the VNF instance by the VNFM is the target deployment flavor, the notification message is used to notify any one or more of the NFVO and the EMS that the currently configured deployment flavor of the VNF instance is changed to the target deployment flavor.

In this embodiment of this application, after obtaining the performance parameter that reflects the running status of the VNF instance, the VNFM determines, based on the mapping relationship between the performance parameter and the deployment flavor in the descriptor file corresponding to the VNF instance, a target deployment flavor that is suitable to be configured in the running status of the VNF instance, so as to configure, for the VNF instance, a deployment flavor that matches the running status of the VNF instance, and perform resource configuration for the VNF more properly. In this way, a resource range specified by the deployment flavor configured for the VNF instance can meet a running requirement of the VNF instance, thereby ensuring a normal running status of the VNF instance.

Optionally, before step 204, this embodiment of this application may further include: determining the currently configured deployment flavor of the VNF instance, for example, determining, based on the identification information of the VNF instance, a deployment flavor that is currently bound to the identification information.

It should be noted that when it is determined that the currently configured deployment flavor of the VNF instance is different from the target deployment flavor, and the deployment flavor configured for the VNF instance needs to be changed, it may also be considered to change the deployment flavor of the VNF instance to the target deployment flavor by terminating the VNF instance and then creating a new VNF instance and configuring the target deployment flavor for the newly created VNF instance. However, a process from terminating the VNF instance to creating the new VNF instance is relatively time-consuming, and leads to an excessively long service interruption time. However, the binding relationship between the VNF instance and the deployment flavor is directly changed without terminating the VNF instance, so that a service interruption probability can be reduced, thereby ensuring a running status of the VNF instance.

The following further describes the embodiments of the present invention with reference to more accompanying drawings.

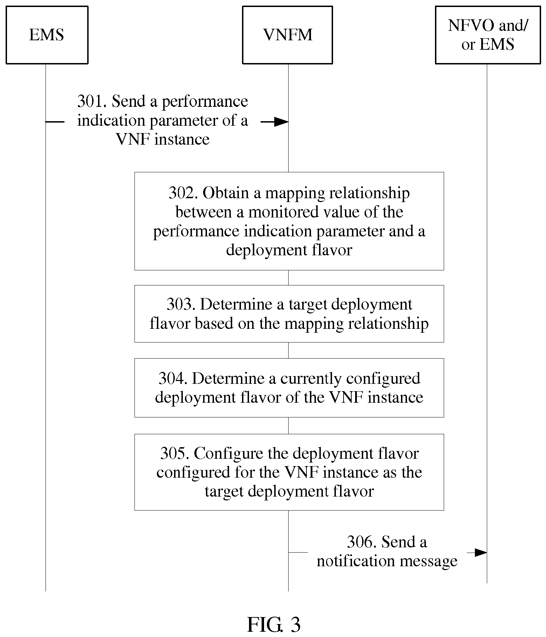

An example in which a performance parameter is a performance indication parameter of a VNF instance is used to describe a resource configuration method in an embodiment of this application. As shown in FIG. 3, FIG. 3 shows a schematic communication interaction diagram of a resource configuration method according to an embodiment of the present invention.

In step 301, an EMS sends identification information of the VNF instance and the performance indication parameter of the VNF instance to a VNFM, where the performance indication parameter includes a monitored value.

The EMS may monitor a change status of the performance indication parameter in the VNF instance, to obtain the monitored value of the performance indication parameter of the VNF instance.

It should be noted that, in this embodiment, that the EMS sends the performance indication parameter to the VNFM is merely used as an example for description. However, during actual application, the VNF instance may also obtain the identification information and the performance indication parameter that are of the VNF instance and send the identification information and the performance indication parameter to the VNFM.

In step 302, the VNFM queries, based on the identification information of the VNF instance, a database for a VNFD corresponding to the identification information of the VNF instance, and obtains a mapping relationship in the VNFD.

The VNFD describes one or more deployment flavors that can be selected by the VNF instance, and a deployment flavor corresponding to the performance indication parameter of different monitored values or in monitored value ranges.

Optionally, the performance indication parameter may further include a type of the performance indication parameter. For example, the "performance indication parameter indicating an enumerated value of a running health index of the VNF application layer" mentioned in the foregoing embodiment is a type of performance indication parameter. Certainly, there may be another type of performance indication parameter, for example, a type of performance indication parameter that indicates a response speed index of the application layer. Correspondingly, the mapping relationship may include a type of a performance indication parameter corresponding to each deployment flavor in the VNFD and one or more monitored values of the performance indication parameter or a range of the monitored value.

In step 303, the VNFM determines, based on the mapping relationship obtained in step 302, a target deployment flavor corresponding to the monitored value obtained in step 301.

In step 304, the VNFM determines a currently configured deployment flavor of the VNF instance.

Optionally, the VNFM may query for a binding relationship between the identification information of the VNF instance and identification information of the deployment flavor based on the identification information of the VNFM instance, and determine the identification information of the deployment flavor that is currently bound to the identification information of the VNF instance, so as to determine the currently configured deployment flavor of the VNF instance.

In step 305, when determining that the currently configured deployment flavor of the VNF instance is not the target deployment flavor, the VNFM changes the deployment flavor configured for the VNF instance to the target deployment flavor.

Step 305 may be the same as step 204 in FIG. 2, and details are not described herein again.

In step 306, the VNFM sends a notification message to an NFVO and/or the EMS, where the notification message is used to notify the VNF instance that the currently configured deployment flavor is changed to the target deployment flavor.

It should be noted that step 306 is optional, and a purpose of performing step 305 is merely to notify the NFVO and the EMS that the deployment flavor configured for the VNF instance is changed.

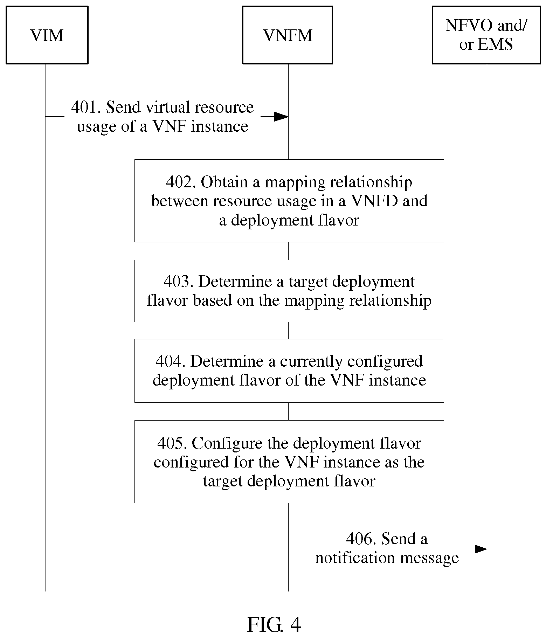

An example in which a performance parameter is virtual resource usage of a VNF instance is used to describe a resource configuration method in an embodiment of this application. As shown in FIG. 4, FIG. 4 shows another schematic communication interaction diagram of a resource configuration method according to an embodiment of the present invention.

In step 401, a VIM sends identification information of the VNF instance and the virtual resource usage of the VNF instance to a VNFM.

For example, the virtual resource usage may be a ratio of a virtual resource occupied by current running of the VNF instance to a maximum quantity of available resources, for example, a ratio of memory occupied by current service processing of the VNF instance to maximum available memory of the VNF instance.

In step 402, the VNFM determines, based on the identification information of the VNF instance, a VNFD corresponding to the identification information of the VNF instance, and obtains a mapping relationship between each deployment flavor of a plurality of deployment flavors that can be selected by the VNFD and a value range of the virtual resource usage.

A requirement of the VNF instance for a virtual resource in a current running status may be reflected by using the virtual resource usage. Therefore, deployment flavors suitable to be configured when the virtual resource usage of the VNF instance is within different ranges may be preconfigured.

In step 403, the VNFM determines, based on the mapping relationship between the deployment flavor and the value range of the virtual resource usage, a target deployment flavor corresponding to the virtual resource usage of the VNF instance.

In step 404, the VNFM determines a currently configured deployment flavor of the VNF instance.

In step 405, when determining that the currently configured deployment flavor of the VNF instance is not the target deployment flavor, the VNFM changes the deployment flavor configured for the VNF instance to the target deployment flavor.

In step 406, the VNFM sends a notification message to an NFVO and/or an EMS, where the notification message is used to notify the VNF instance that the currently configured deployment flavor is changed to the target deployment flavor.

Step 406 is optional.

Step 404, step 405, and step 406 in the embodiment in FIG. 4 may be respectively the same as step 304, step 305, and step 306 in the embodiment in FIG. 3, and a same part is not described again.

It may be understood that during actual application, the VNFM may determine, based on both a monitored value of a performance indication parameter of the VNF instance and the virtual resource usage of the VNF instance, whether the deployment flavor configured for the VNF instance needs to be changed currently. Correspondingly, the mapping relationship in the VNFD may include the mapping relationship among the value range of the virtual resource usage, the monitored value of the performance indication parameter or a range of the monitored value, and the deployment flavor. After obtaining a value of the virtual resource usage of the VNF instance and the monitored value of the performance indication parameter of the VNF instance, the VNFD may determine the target deployment flavor based on the mapping relationship.

According to another aspect, an embodiment of this application further provides another resource configuration method, and the resource configuration method may be applied to an EMS.

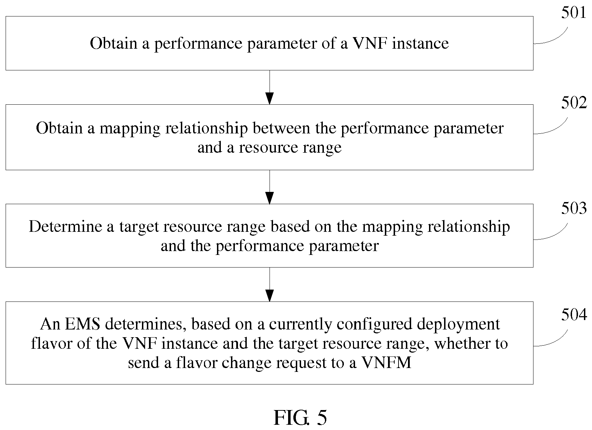

Referring to FIG. 5, FIG. 5 shows a possible schematic flowchart of another resource configuration method according to an embodiment of this application. As shown in FIG. 5, the another resource configuration method may include the following steps.

501. The EMS obtains a performance parameter that reflects a running status of a VNF instance.

The performance parameter is the same as the performance parameter in the foregoing resource configuration method.

For example, in a possible case, the performance parameter may be a performance indication parameter of the VNF instance. The performance indication parameter includes at least one monitored value of the performance indication parameter. A specific meaning of the monitored value of the performance indication parameter may be predetermined by a VNF provider.

For another example, in another possible case, the performance parameter may be virtual resource usage of the VNF instance, for example, CPU usage. The virtual resource usage of the VNF instance may be monitored by a virtualized infrastructure manager VIM, so that the virtual resource usage of the VNF instance can be obtained by using the VIM. For example, the VIM sends the virtual resource usage of the VNF instance to the VNF instance or the EMS.

502. The EMS obtains a mapping relationship between the performance parameter of the VNF and a required resource range.

Optionally, the mapping relationship between the performance parameter of the VNF and the required resource range may be preconfigured in the EMS.

503. The EMS determines, based on the mapping relationship and the performance parameter that reflects the running status of the VNF instance, a target resource range required by the VNF instance in the running status.

In an example, the resource range in the mapping relationship may be a range interval that reflects a virtual resource requirement situation. Correspondingly, it is determined that the target resource range required by the VNF instance may be a range interval of the virtual resource, for example, required memory is a range interval from a to b.

In addition, with reference to different cases of the performance parameter, in a possible case, the mapping relationship may be specifically at least one monitored value of a performance indication parameter corresponding to each resource range interval of a plurality of resource range intervals that can be selected by the VNF instance or a range of the monitored value. For example, when the monitored value of the performance indication parameter is within a first range, it is suitable to select a first type of resource range interval. In another possible case, the mapping relationship may be specifically a value range of virtual resource usage corresponding to each resource range interval of a plurality of resource range intervals that can be selected by the VNF instance. For example, when the virtual resource usage is within a first value range, the required resource range is a first resource range interval.

In another example, considering that a deployment flavor is deployed with a range of a virtual resource that can be used by the VNF instance, different resource ranges may be reflected by using the deployment flavor. Therefore, the resource range in the mapping relationship may be the deployment flavor. Correspondingly, determining the target resource range required by the VNF instance may be determining a target deployment flavor that is required in the running status of the VNF instance.

In addition, with reference to different cases of the performance parameter, in a possible case, the mapping relationship may be specifically at least one monitored value of a performance indication parameter corresponding to each deployment flavor in at least one deployment flavor that can be selected by the VNF instance or a range of the monitored value. In another possible case, the mapping relationship may be a value range of the virtual resource usage corresponding to each deployment flavor of a plurality of deployment flavors that can be selected by the VNF instance.

504. The EMS determines, based on a currently configured deployment flavor of the VNF instance and the target resource range, whether to send a flavor change request to a VNFM.

The flavor change request is used to request to change the deployment flavor of the VNF instance to a deployment flavor that has the target resource range.

For example, the EMS may send the flavor change request to the VNFM when the target resource range and a resource range specified by the currently configured deployment flavor of the VNF instance do not match.

For example, when the target resource range is a resource range interval, it may be detected whether a resource in the range interval is within the resource range deployed by the currently configured deployment flavor. Correspondingly, the flavor change request may carry information about the resource range interval. After receiving the flavor change request, the VNFM determines, based on the resource range interval carried in the flavor change request, the target deployment flavor that has the target resource range, and configures the deployment flavor of the VNF instance as the target deployment flavor.

When the target resource range is the target deployment flavor, the flavor change request may be sent to the VNFM when the currently configured deployment flavor of the VNF instance is different from the target deployment flavor, so as to request the VNFM to change the deployment flavor configured for the VNF instance to the target deployment flavor. For example, the flavor request may carry an identifier of the target deployment flavor, and after receiving the flavor change request, the VNFM deletes a binding relationship between the VNF instance and an identifier of the currently configured deployment flavor, and establishes a binding relationship between the VNF instance and the identifier of the target deployment flavor.

Optionally, before step 504, the EMS may further determine a currently configured deployment flavor of the VNF instance. In an implementation, the EMS may store information about the currently configured deployment flavor of the VNF instance, for example, store the identifier of the currently configured deployment flavor of the VNF instance and the resource range deployed by the deployment flavor. In another implementation, the EMS may send a query request to the VNFM in real time, so as to request the VNFM to feed back the currently configured deployment flavor of the VNF instance.

In this embodiment of this application, after obtaining the performance parameter that reflects the running status of the VNF instance, the EMS determines, based on the mapping relationship between the performance parameter of the VNF and the required resource range, the target resource range required by the VNF instance in the running status. In this case, the EMS may determine, based on the currently configured deployment flavor of the VNF instance and the target deployment range, whether to send the flavor change request to the VNFM, so as to request the VNFM to configure a deployment flavor that has the target resource range for the VNF instance when the deployment flavor configured for the VNF instance cannot meet a current running requirement of the VNF instance, thereby alleviating inability of the VNF instance to meet a service processing requirement, and improving reliability of service processing of the VNF instance.

It should be noted that the another resource configuration method in FIG. 5 is described by using an example in which an execution body is the EMS. However, during actual application, the resource configuration method in FIG. 5 may also be applied to the VNF instance. A specific implementation process is similar to the process in which the execution body is the EMS, and details are not described herein again.

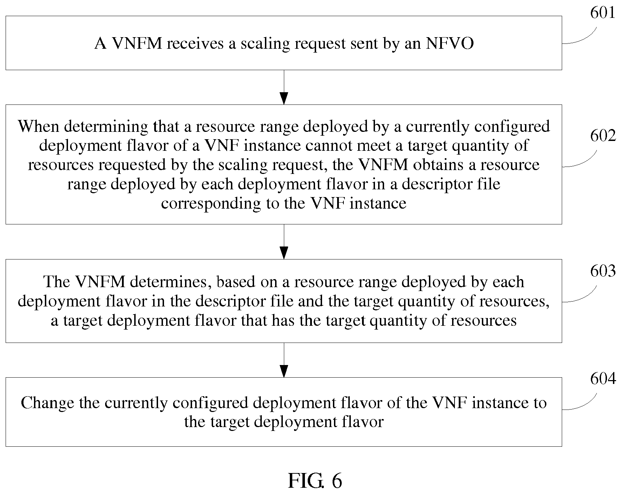

According to another aspect, an embodiment of this application further provides another resource configuration method. As shown in FIG. 6, the another resource configuration method in this embodiment of this application may include the following steps.

601. A VNFM receives a scaling request sent by an NFVO.

The scaling request carries identification information of a VNF instance and a target quantity of currently required resources.

For example, after determining, based on a service requirement, that a quantity of resources required by the VNF instance needs to be changed, an OSS/BSS may send a capacity change indication to the NFVO. In this case, after receiving the indication, the NFVO sends the scaling request to the VNFM based on the target quantity of resources that is indicated by the OSS/BSS and that is required by the VNF instance.

602. When determining that a resource range deployed by a currently configured deployment flavor of the VNF instance cannot meet the target quantity of resources requested by the scaling request, the VNFM obtains a resource range deployed by each deployment flavor in a descriptor file corresponding to the VNF instance.

The descriptor file may be understood as a VNFD. The descriptor file may include at least one deployment flavor that can be selected and configured for the VNF instance and a resource range deployed by each deployment flavor.

Optionally, before step 602, this embodiment of this application may further include: determining, by the VNFM, a currently configured deployment flavor of the VNF instance. For example, the VNFM determines, based on the identification information of the VNF instance, the currently configured deployment flavor of the VNF instance. A specific manner of determining the currently configured deployment flavor of the VNF instance may be the same as the manner described in the embodiment of the foregoing resource configuration method, and details are not described herein again.

Optionally, before obtaining a resource range deployed by each deployment flavor in the descriptor file, the VNFM may access the descriptor file corresponding to the VNF instance, so as to obtain a resource range deployed by each deployment flavor in the descriptor file.

603. The VNFM determines, based on a resource range deployed by each deployment flavor in the descriptor file and the target quantity of resources, a target deployment flavor that has the target quantity of resources.

604. Change the currently configured deployment flavor of the VNF instance to the target deployment flavor.

Step 604 may be the same as the process in which the VNFM configures the target deployment flavor for the VNF instance in the foregoing embodiment.

Optionally, after step 604, this embodiment of this application may further include: sending, by the VNFM, a notification message to any one or more of the NFVO and an EMS, where the notification message is used to notify any one or more of the NFVO and the EMS that the currently configured deployment flavor of the VNF instance is changed to the target deployment flavor.

In this embodiment of this application, the VNFM may determine, based on the scaling request that is for the VNF instance and that is sent by the NFVO, whether the currently configured deployment flavor of the VNF instance can meet the target quantity of resources requested by the scaling request, and may change the deployment flavor configured for the VNF instance when the currently configured deployment flavor of the VNF instance cannot meet the target quantity of resources requested by the scaling request, so as to meet a service requirement.

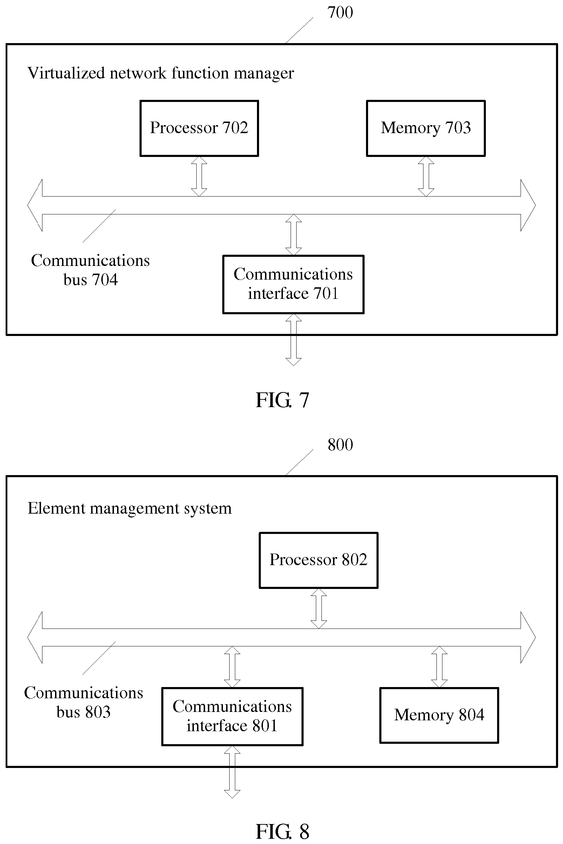

FIG. 7 shows a possible schematic structural diagram of a virtualized network function manager in the foregoing embodiments.

The virtualized network function manager 700 includes a communications interface 701 and a processor 702. The communications interface 701 is configured to: obtain a performance parameter that reflects a running status of a virtualized network function VNF instance, and obtain a mapping relationship between the performance parameter and a deployment flavor in a descriptor file corresponding to the VNF instance.

The processor 702 is configured to: determine, based on the mapping relationship and the performance parameter that reflects the running status of the VNF instance, a target deployment flavor required by the VNF instance in the running status; and perform resource configuration for the VNF instance based on a currently configured deployment flavor of the VNF instance and the target deployment flavor.

Certainly, the virtualized network function manager may further include a memory 703, and the memory 703 is configured to store program code and data that are used by the processor to perform the foregoing operations. The memory may be further configured to store a correspondence between the VNF instance and the currently configured deployment flavor of the VNF instance.

It may be understood that FIG. 7 shows only a simplified design of the virtualized network function manager. During actual application, the virtualized network function manager 700 may further include a communications bus 704, and the communications interface, the processor, and the like may be connected by using the communications bus.

Certainly, the virtualized network function manager may further include a memory, any quantity of controllers, a communications unit, and the like; and all virtualized network function managers that can implement the present invention fall within the protection scope of this application.

Optionally, that the processor performs resource configuration for the VNF instance based on the currently configured deployment flavor of the VNF instance and the target deployment flavor is specifically: when the currently configured deployment flavor of the VNF instance is different from the target deployment flavor, changing the deployment flavor configured for the VNF instance from the current deployment flavor to the target deployment flavor.

Optionally, the communications interface may be further configured to access the descriptor file corresponding to the VNF instance before obtaining the mapping relationship between the performance parameter and the deployment flavor in the descriptor file corresponding to the VNF instance.

In a possible implementation, that the communications interface obtains the performance parameter that reflects the running status of the VNF instance is specifically obtaining a performance indication parameter of the VNF instance, where the performance indication parameter includes a monitored value, and the performance indication parameter is used to indicate a performance running status of an application layer of the VNF instance.

The mapping relationship that is between the performance parameter and the deployment flavor and that is obtained by the communications interface includes:
at least one monitored value of the performance indication parameter corresponding to each deployment flavor of a plurality of deployment flavors that can be selected by the VNF instance or a range of the monitored value.

Optionally, that the communications interface obtains the performance indication parameter of the VNF instance is specifically obtaining the performance indication parameter that is of the VNF instance and that is sent by an element management system EMS of the VNF instance.

Optionally, the performance indication parameter obtained by the communications interface further includes a type of the performance indication parameter; and
the mapping relationship that is between the performance parameter and the deployment flavor and that is obtained by the communications interface includes:
the type of the performance indication parameter corresponding to each deployment flavor of the plurality of deployment flavors and one or more monitored values of the performance indication parameter or a range of the monitored value.

In another possible implementation, that the communications interface obtains the performance parameter that reflects the running status of the VNF instance is specifically obtaining virtual resource usage of the VNF instance.

The mapping relationship that is between the performance parameter and the deployment flavor and that is obtained by the communications interface includes:
a value range of the virtual resource usage corresponding to each deployment flavor of the plurality of deployment flavors that can be selected by the VNF instance.

Optionally, that the communications interface obtains the virtual resource usage of the VNF instance includes:
receiving the virtual resource usage that is of the VNF instance and that is sent by a virtualized infrastructure manager VIM.

Further, the communications interface is further configured to: after the processor configures the deployment flavor configured for the VNF instance as the target deployment flavor, send a notification message to a network functions virtualization orchestrator NFVO and/or an EMS, where the notification message is used to notify the NFVO and/or the EMS that the currently configured deployment flavor of the VNF instance is changed to the target deployment flavor.

Optionally, the mapping relationship between the performance parameter and the deployment flavor is written into the descriptor file of the VNF in a design phase of the VNF.

FIG. 8 shows a possible schematic structural diagram of an element management system in the foregoing embodiments.

The element management system 800 may include a communications interface 801 and a processor 802.

The communications interface 801 is configured to obtain a performance parameter that reflects a running status of a VNF instance.

The processor 802 is configured to: obtain a mapping relationship between the performance parameter of the VNF and a required resource range; determine, based on the mapping relationship and the performance parameter that reflects the running status of the VNF instance, a target resource range required by the VNF instance in the running status; and determine, based on a currently configured deployment flavor of the VNF instance and the target resource range, whether to send a flavor change request to a VNFM, where the flavor change request is used to request to change the deployment flavor of the VNF instance to a deployment flavor that has the target resource range.

During actual application, the element management system may further include a communications bus 803, and the communications interface, the processor, and the like may be connected by using the communications bus.

It may be understood that FIG. 8 shows only a simplified design of the element management system. The element management system may further include a memory 804, and the memory is configured to store program code and data that are used by the processor to perform the foregoing operation. The memory may be further configured to store the mapping relationship between the performance parameter and the resource range. Certainly, the element management system may further include a memory, any quantity of controllers, a communications unit, and the like, and all element management systems that can implement the present invention fall within the protection scope of this application.

Optionally, the processor 802 is specifically configured to: when the target resource range and a resource range specified by the currently configured deployment flavor of the VNF instance do not match, control the communications interface to send the flavor change request to the VNFM.

Correspondingly, the communications interface is further configured to: when the target resource range and the resource range specified by the currently configured deployment flavor of the VNF instance do not match, send the flavor change request to the VNFM.

Optionally, that the processor obtains the mapping relationship is specifically: obtaining, by the processor, the mapping relationship between a preconfigured performance parameter of the VNF and the required resource range.

Optionally, the mapping relationship obtained by the processor 802 is specifically a mapping relationship that is between the performance parameter of the VNF and the deployment flavor and that is obtained by the element management system; and
that the processor determines the target resource range is specifically determining, based on the mapping relationship and the performance parameter that reflects the running status of the VNF instance, a target deployment flavor that needs to be configured for the VNF instance in the running status.

Optionally, the performance parameter obtained by the communications interface 801 includes:
a performance indication parameter of the VNF instance, where the performance indication parameter includes the monitored value, and the performance indicator is used to indicate a performance running status of an application layer of the VNF instance; or
virtual resource usage of the VNF instance.

According to another aspect, an embodiment of this application further provides another virtualized network function manager, and a composition structure of the virtualized network function manager is the same as the composition structure in FIG. 7.

A difference is that the communications interface 701 is configured to: receive a scaling request that is sent by an NFVO, where the scaling request carries identification information of the VNF instance and a target quantity of currently required resources; and obtain a resource range deployed by the currently configured deployment flavor of the VNF instance in a descriptor file corresponding to the VNF instance.

The processor 702 is configured to: when it is determined that the resource range deployed by the currently configured deployment flavor of the VNF instance cannot meet the target quantity of resources requested by the scaling request, obtain a resource range deployed by each deployment flavor in the descriptor file of the VNF instance; determine, based on a resource range deployed by each deployment flavor in the descriptor file and the target quantity of resources, a target deployment flavor that has the target quantity of resources; and change the currently configured deployment flavor of the VNF instance to the target deployment flavor.

Optionally, the processor may further determine the currently configured deployment flavor of the VNF instance, for example, determine, based on the identification information of the VNF instance, the currently configured deployment flavor of the VNF instance.

Optionally, before obtaining a resource range deployed by each deployment flavor in the descriptor file, the communications interface may be further configured to access the descriptor file corresponding to the VNF instance, so as to obtain a resource range deployed by each deployment flavor in the descriptor file.

The embodiments in this specification are all described in a progressive manner, for same or similar parts in the embodiments, reference may be made to these embodiments, and each embodiment focuses on a difference from other embodiments. The apparatus disclosed in the embodiments is described relatively simply because it corresponds to the method disclosed in the embodiments, and for portions related to those of the method, reference may be made to the description of the method.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

In combination with the embodiments disclosed in this specification, method or algorithm steps may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

The embodiments disclosed above are described to enable a person skilled in the art to implement or use the present invention. Therefore, the present invention will not be limited to the embodiments described in this specification but extends to the widest scope of the claims.

## Claims

1. A resource configuration method, comprising:
obtaining (201, 301, 401), by a virtualized network function manager, VNFM, a performance parameter that reflects a running status of a virtualized network function, VNF, instance, wherein the performance parameter is a performance indication parameter of the VNF instance and is a monitored value representing a running health index of the VNF instance;
obtaining (202, 302, 402), by the VNFM, a mapping relationship in a VNF descriptor, VNFD, corresponding to the VNF instance, wherein the mapping relationship is a mapping relationship between the performance parameter and the deployment flavor;
determining (203, 303, 403), by the VNFM based on the mapping relationship and the performance parameter that reflects the running status of the VNF instance, a target deployment flavor required by the VNF instance in the running status; and
performing (204), by the VNFM, resource configuration for the VNF instance based on a currently configured deployment flavor of the VNF instance and the target deployment flavor;
wherein the obtaining, by the VNFM, the performance indication parameter of the VNF instance comprises:
receiving, by the VNFM, the performance indication parameter of the VNF instance from an element management system, EMS, of the VNF instance; or
receiving, by the VNFM, the performance indication parameter of the VNF instance from the VNF instance.

2. The method according to claim 1, wherein the performing, by the VNFM, resource configuration for the VNF instance based on a currently configured deployment flavor of the VNF instance and the target deployment flavor comprises:
when the currently configured deployment flavor of the VNF instance is different from the target deployment flavor, changing, by the VNFM, the deployment flavor configured for the VNF instance from the current configured deployment flavor to the target deployment flavor.

3. The method according to claim 1, wherein the performance indication parameter is a parameter of a VNF indicator.

4. A virtualized network function manager, VNFM, comprising:
a communications interface (701), configured to: obtain a performance parameter that reflects a running status of a virtualized network function, VNF, instance from an element management system, EMS, or from the VNF instance, and obtain a mapping relationship in a VNF descriptor, VNFD, corresponding to the VNF instance, wherein the mapping relationship is a mapping relationship between the performance parameter and the deployment flavor, the performance parameter is a performance indication parameter of the VNF instance and is a monitored value representing a running health index of the VNF instance; and
a processor (702), configured to: determine, based on the mapping relationship and the performance parameter that reflects the running status of the VNF instance, a target deployment flavor required by the VNF instance in the running status; and perform resource configuration for the VNF instance based on a currently configured deployment flavor of the VNF instance and the target deployment flavor.

5. The virtualized network function manager according to claim 4, wherein that the processor is configured to perform resource configuration for the VNF instance based on the currently configured deployment flavor of the VNF instance and the target deployment flavor comprises: the processor configured to change the deployment flavor configured for the VNF instance from the current deployment flavor to the target deployment flavor when the currently configured deployment flavor of the VNF instance is different from the target deployment flavor.

6. The virtualized network function manager according to claim 4, wherein the performance indication parameter is a parameter of a VNF indicator.

7. A computer program product comprising instructions which, when executed by a computer, cause the computer to carry out the method in any one of claims 1 to 3.

8. A system, comprising:
a virtualized network function manager, VNFM, configured to perform the method in any one of claims 1 to 3; and
a network functions virtualization orchestrator, NFVO, or an element management system, EMS, configured to receive a notification message from the VNFM, wherein the notification message notifies the NFVO or the EMS that a currently configured deployment flavor of a virtualized network function, VNF, instance is changed to a target deployment flavor.

## Patentansprüche

1. Betriebsmittelkonfigurationsverfahren, das Folgendes umfasst:
Erhalten (201, 301, 401) durch einen virtualisierten Netzfunktionsmanager, VNFM, eines Leistungsparameters, der einen Laufzustand einer virtualisierten Netzfunktionsinstanz, VNF-Instanz, reflektiert, wobei der Leistungsparameter ein Leistungsangabeparameter der VNF-Instanz ist und ein überwachter Wert ist, der einen Laufgesundheitsindex der VNF-Instanz repräsentiert;
Erhalten (202, 302, 402) durch den VNFM einer Abbildungsbeziehung in einem VNF-Beschreiber, VNFD, der der VNF-Instanz entspricht, wobei die Abbildungsbeziehung eine Abbildungsbeziehung zwischen dem Leistungsparameter und der Einsatzvariante ist;
Bestimmen (203, 303, 403) durch den VNFM anhand der Abbildungsbeziehung und des Leistungsparameters, der den Laufzustand der VNF-Instanz reflektiert, einer Zieleinsatzvariante, die durch die VNF-Instanz in dem Laufzustand benötigt wird; und Ausführen (204) durch den VNFM einer Betriebsmittelkonfiguration für die VNF-Instanz anhand einer aktuell konfigurierten Einsatzvariante der VNF-Instanz und der Zieleinsatzvariante;
wobei das Erhalten durch den VNFM des Leistungsangabeparameters der VNF-Instanz Folgendes umfasst:
Empfangen durch den VNFM des Leistungsangabeparameters der VNF-Instanz von einem Elementmanagementsystem, EMS, der VNF-Instanz; oder
Empfangen durch den VNFM des Leistungsangabeparameters der VNF-Instanz von der VNF-Instanz.

2. Verfahren nach Anspruch 1, wobei das Ausführen durch den VNFM einer Betriebsmittelkonfiguration für die VNF-Instanz anhand einer aktuell konfigurierten Einsatzvariante der VNF-Instanz und der Zieleinsatzvariante Folgendes umfasst:
dann, wenn die aktuell konfigurierte Einsatzvariante der VNF-Instanz von der Zieleinsatzvariante verschieden ist, Ändern durch den VNFM der Einsatzvariante, die für die VNF-Instanz konfiguriert ist, von der aktuellen konfigurierten Einsatzvariante zu der Zieleinsatzvariante.

3. Verfahren nach Anspruch 1, wobei der Leistungsangabeparameter ein Parameter eines VNF-Indikators ist.

4. Virtualisierter Netzfunktionsmanager, VNFM, der Folgendes umfasst:
eine Kommunikationsschnittstelle (701), die konfiguriert ist zum: Erhalten eines Leistungsparameters, der einen Laufzustand einer virtualisierten Netzfunktionsinstanz, VNF-Instanz, reflektiert, von einem Elementmanagementsystem, EMS, oder von der VNF-Instanz und Erhalten einer Abbildungsbeziehung in einem VNF-Beschreiber, VNFD, der der VNF-Instanz entspricht, wobei die Abbildungsbeziehung eine Abbildungsbeziehung zwischen dem Leistungsparameter und der Einsatzvariante ist, wobei der Leistungsparameter ein Leistungsangabeparameter der VNF-Instanz ist und ein überwachter Wert ist, der einen Laufgesundheitsindex der VNF-Instanz repräsentiert; und
einen Prozessor (702), der konfiguriert ist zum: Bestimmen anhand der Abbildungsbeziehung und des Leistungsparameters, der den Laufzustand der VNF-Instanz reflektiert, einer Zieleinsatzvariante, die durch die VNF-Instanz in dem Laufzustand benötigt wird; und Ausführen einer Betriebsmittelkonfiguration für die VNF-Instanz anhand einer aktuell konfigurierten Einsatzvariante der VNF-Instanz und der Zieleinsatzvariante.

5. Virtualisierter Netzfunktionsmanager nach Anspruch 4, wobei dass der Prozessor konfiguriert ist, eine Betriebsmittelkonfiguration für die VNF-Instanz anhand der aktuell konfigurierten Einsatzvariante der VNF-Instanz und der Zieleinsatzvariante auszuführen, Folgendes umfasst: dass der Prozessor konfiguriert ist, die Einsatzvariante, die für die VNF-Instanz konfiguriert ist, von der aktuellen Einsatzvariante zu der Zieleinsatzvariante zu ändern, wenn die aktuell konfigurierte Einsatzvariante der VNF-Instanz von der Zieleinsatzvariante verschieden ist.

6. Virtualisierter Netzfunktionsmanager nach Anspruch 4, wobei der Leistungsangabeparameter ein Parameter eines VNF-Indikators ist.

7. Computerprogrammprodukt, das Anweisungen umfasst, die dann, wenn sie durch einen Computer ausgeführt werden, bewirken, dass der Computer das Verfahren nach einem der Ansprüche 1 bis 3 ausführt.

8. System, das Folgendes umfasst:
einen virtualisierten Netzfünktionsmanager, VNFM, der konfiguriert ist, das Verfahren nach einem der Ansprüche 1 bis 3 auszuführen; und
einen Netzfunktionenvirtualisierungs-Orchestrator, NFVO, oder ein Elementmanagementsystem, EMS, das konfiguriert ist, eine Benachrichtigungsnachricht von dem VNFM zu empfangen, wobei die Benachrichtigungsnachricht dem NFVO oder dem EMS meldet, dass eine aktuell konfigurierte Einsatzvariante einer virtualisierten Netzfunktionsinstanz, VNF-Instanz, zu einer Zieleinsatzvariante geändert wird.

## Revendications

1. Procédé de configuration de ressource, comprenant les étapes consistant à :
obtenir (201, 301, 401), par un gestionnaire de fonctions de réseau virtualisées (VNFM), un paramètre de performances qui reflète un statut d'exécution d'une instance de fonction de réseau virtualisée (VNF), le paramètre de performances étant un paramètre d'indication de performances de l'instance de VNF et étant une valeur surveillée qui représente un indice d'intégrité d'exécution de l'instance de VNF ;
obtenir (202, 302, 402), par le VNFM, une relation de concordance dans un descripteur de VNF (VNFD) qui correspond à l'instance de VNF, la relation de concordance étant une relation de concordance entre le paramètre de performances et la variante de déploiement ;
déterminer (203, 303, 403), par le VNFM sur la base de la relation de concordance et du paramètre de performances qui reflète le statut d'exécution de l'instance de VNF, une variante de déploiement cible requise par l'instance de VNF dans le statut d'exécution ; et
réaliser (204), par le VNFM, une configuration de ressource pour l'instance de VNF sur la base d'une variante de déploiement actuellement configurée de l'instance de VNF et de la variante de déploiement cible ;
l'obtention, par le VNFM, du paramètre d'indication de performances de l'instance de VNF comprenant l'étape consistant à :
recevoir, par le VNFM, le paramètre d'indication de performances de l'instance de VNF en provenance d'un système de gestion d'éléments (EMS) de l'instance de VNF ;
ou recevoir, par le VNFM, le paramètre d'indication de performances de l'instance de VNF en provenance de l'instance de VNF

2. Procédé selon la revendication 1, dans lequel la réalisation, par le VNFM, d'une configuration de ressource pour l'instance de VNF sur la base d'une variante de déploiement actuellement configurée de l'instance de VNF et de la variante de déploiement cible comprend l'étape consistant à :
quand la variante de déploiement actuellement configurée de l'instance de VNF est différente de la variante de déploiement cible, changer, par le VNFM, la variante de déploiement configurée pour l'instance de VNF de la variante de déploiement actuellement configurée à la variante de déploiement cible.

3. Procédé selon la revendication 1, dans lequel le paramètre d'indication de performances est un paramètre d'un indicateur de VNF

4. Gestionnaire de fonctions de réseau virtualisées (VNFM), comprenant :
une interface de communication (701), configurée pour: obtenir un paramètre de performances qui reflète un statut d'exécution d'une instance de fonction de réseau virtualisée (VNF) à partir d'un système de gestion d'éléments (EMS) ou à partir de l'instance de VNF, et obtenir une relation de concordance dans un descripteur de VNF (VNFD) qui correspond à l'instance de VNF, la relation de concordance étant une relation de concordance entre le paramètre de performances et la variante de déploiement, le paramètre de performances étant un paramètre d'indication de performances de l'instance de VNF et étant une valeur surveillée qui représente un indice d'intégrité d'exécution de l'instance de VNF ; et
un processeur (702), configuré pour : déterminer, sur la base de la relation de concordance et du paramètre de performances qui reflète le statut d'exécution de l'instance de VNF, une variante de déploiement cible requise par l'instance de VNF dans le statut d'exécution ; et réaliser une configuration de ressource pour l'instance de VNF sur la base d'une variante de déploiement actuellement configurée de l'instance de VNF et de la variante de déploiement cible.

5. Gestionnaire de fonctions de réseau virtualisées selon la revendication 4, dans lequel le fait que le processeur soit configuré pour réaliser une configuration de ressource pour l'instance de VNF sur la base de la variante de déploiement actuellement configurée de l'instance de VNF et de la variante de déploiement cible comprend : le processeur configuré pour changer la variante de déploiement configurée pour l'instance de VNF de la variante de déploiement actuellement configurée à la variante de déploiement cible quand la variante de déploiement actuellement configurée de l'instance de VNF est différente de la variante de déploiement cible.

6. Gestionnaire de fonctions de réseau virtualisées selon la revendication 4, dans lequel le paramètre d'indication de performances est un paramètre d'un indicateur de VNF

7. Produit de programme informatique comprenant des instructions qui, lorsqu'elles sont exécutées par un ordinateur, amènent l'ordinateur à réaliser le procédé selon l'une quelconque des revendications 1 à 3.

8. Système, comprenant :
un gestionnaire de fonctions de réseau virtualisées (VNFM) configuré pour réaliser le procédé selon l'une quelconque des revendications 1 à 3 ; et
un orchestrateur de virtualisation de fonctions de réseau (NFVO) ou un système de gestion d'éléments (EMS), configuré pour recevoir un message de notification en provenance du VNFM, le message de notification notifiant au NFVO ou à l'EMS qu'une variante de déploiement actuellement configurée d'une instance de fonction de réseau virtualisée (VNF) est changée pour une variante de déploiement cible.
